# EUROPÄISCHE PATENTSCHRIFT

(11) **EP 3 365 632 B1**
(45) Veröffentlichungstag und Bekanntmachung des Hinweises auf die Patenterteilung: **01.04.2020**
(21) Anmeldenummer: 16791332.6
(22) Anmeldetag: 19.10.2016
(51) Int. Cl.: G01C 21/36, G06F 3/048

(54) **VERFAHREN ZUR VERÄNDERTEN BILDLICHEN DARSTELLUNG DER ORTSLAGEN AUSGEWÄHLTER ZIELPUNKTE IN KARTEN**
METHOD FOR VISUALLY DISPLAYING THE POSITIONS OF SELECTED DESTINATIONS IN MAPS IN AN ALTERED MANNER
PROCÉDÉ DE REPRÉSENTATION IMAGÉE MODIFIÉE DES LIEUX DE POINTS DE DESTINATION SÉLECTIONNÉS SUR DES CARTES

(30) Priorität: 19.10.2015 DE 102015117792
(43) Veröffentlichungstag der Anmeldung: 29.08.2018
(73) Patentinhaber: Usadel GmbH, 50667 Koeln (DE)
(72) Erfinder: USADEL, Jan, 50667 Koeln (DE)
(74) Vertreter: Patentanwälte Bauer Vorberg Kayser
(86) Internationale Anmeldenummer: PCT/EP2016/075105
(87) Internationale Veröffentlichungsnummer: WO 2017/067990

(56) Entgegenhaltungen:
- EP-A1- 1 926 074
- DE-A1- 10 046 000
- JP-A- 2005 221 486
- JP-A- 2005 326 210
- US-A1- 2008 177 462
- US-A1- 2012 004 840

## Beschreibung

Die Erfindung bezieht sich auf ein Verfahren nach dem Anspruch 1. Ein Verfahren zur Wiedergabe eines Ausgangspunktes und mehrerer Zielorte auf einem Bildschirm ist aus US 2008/177462 A1 bekannt.

Es ist bekannt, Ortsentfernungen in Karten, insbesondere in Straßenkarten, mit anderen topografischen Gegebenheiten maßstabsgetreu wiederzugeben. Als Informationsgrafik sind Straßenkarten allgemein gebräuchlich und verständlich. Straßenkarten dienen der visuellen Information über Ortslagen. Die Inhalte sind einheitlich an einem Kartenmaßstab ausgerichtet. Somit kann sich der Nutzer einer Straßenkarte anhand verschiedener Symbole und ihrer Anordnung auf der Straßenkarte orientieren, um Entfernungen und den Weg zu einem Zielpunkt abzuschätzen und zu planen.

Auf Grund eines einheitlich geltenden Maßstabs erfolgt die Wiedergabe der angezeigten Symbole, welche die Ortsinformation repräsentieren, im gleichen Verhältnis zur tatsächlichen räumlichen Entfernung. Derartige Straßenkarten werden klassischer Weise in gedruckter Form verbreitet und haben Verwendung auf Monitoren, als visuelle Anzeige der Daten in fahrzeuggebundenen Navigationssystemen, Routenplanern oder Navigationssystemen auf dem PC oder mobilen Geräten. Die informationstechnologische Verwendung eröffnet dem Anwender die visuelle Vermittlung zusätzlicher Informationen, nämlich vor allem die Anzeige seines Standorts bzw. Ausgangspunktes sowie die Hervorhebung von Fahrtrouten und weiterer verkehrsspezifischer ortsgebundener Informationen, wie Verkehrsbeeinträchtigungen, Tankmöglichkeiten und eine geschätzte Fahrtzeit für eine gewählte oder vorgeschlagene Fahrtroute.

Die Darstellung der ortsgebundenen Informationen in einer Informationsgrafik dieser Art bleibt vom Kartenmaßstab abhängig. Daher bleibt auch die Darstellung der Ortsentfernungen an den Kartenmaßstab gebunden und der Anwender schätzt anhand der Darstellung in der Karte die Ortslage und Fahrtzeit, um dorthin zu gelangen, oder er erfährt die Fahrtzeit aus sprachlichen oder visuellen Zusatzinformationen. Die Fahrtzeit hat für die visuelle Darstellung der Ortsinformation nach Kartenmaßstab keinen Einfluss.

Nun können die Fahrtzeiten zu anderen Orten mit gleicher räumlicher Entfernung variieren auf Grund von Verkehrsführungen, Verkehrssituationen, der Wahl des Verkehrsmittels oder anderen Bedingungen. Die Wiedergabe der maßstabsgetreuen Ortsentfernungen kann dann darüber hinwegtäuschen, welcher zeitliche Aufwand zur Überwindung der Entfernung erforderlich ist. So kann die Fahrtdauer für eine räumlich kürzere Strecke zeitlich länger sein, als für eine räumlich längere Strecke, obwohl sie in der maßstabgetreuen Wiedergabe näher bzw. weiter entfernt wiedergegeben sind und die kürzere Entfernung als leichter zu überwinden eingeschätzt wird als der weiter entfernt liegende Ort.

Die Fahrtzeiten und andere Informationen wie Fahrtkosten etc. werden regelmäßig nur als abrufbare Zusatzinformationen vermittelt. Dafür werden regelmäßig alphanumerischer Zeichen verwendet. Eine informationsvermittelnde Veränderung der auf der visuellen Wahrnehmung beruhenden Kartendarstellung in Abhängigkeit zu den Zusatzinformationen findet nicht statt.

Die Verwendung einer herkömmlich maßstabgetreuen Karte liefert dem Anwender keine rein visuell dargestellten Information darüber, in welcher Zeit oder mit welchem Fahrtkostenaufwand die in der Karte angezeigten Orte erreichbar sind und welche Ortsentfernungen mit alternativen Verkehrsmitteln bei gleichem Fahrtkostenaufwand erreichbar wären. Im Handel bekannt sind Navigationssysteme, Routenplaner und elektronische Karten, die Routen nach bestimmten Kriterien wie kürzeste Fahrtzeit oder Fahrtstrecke, bestimmte Straßentypen zu einem ausgewählte Zielpunkt In Karten hervorgehoben anzeigen. Auch lassen sich weitere Informationen wie Fahrtkosten in Abhängigkeit zum gewähltem Verkehrsmittel und Fahrtzlel anzeigen. Jedoch nur als textgebundene Zusatzinformationen.

Die visuelle Informationsvermittlung mittels Straßenkarten nach dem Stand der Technik hat den Nachteil, dass der Anwender nicht auf Anhieb den Aufwand einschätzen kann, um bestimmte Zielorte vom Ausgangspunkt aus zu erreichen. In der visuellen Kartendarstellung wird die kürzeste Entfernung zwischen zwei Orten als leichter zu überwindende Fahrtstrecke wahrgenommen. Möchte der Nutzer sich an anderen Informationen als der Nähe in der Kartendarstellung orientieren, so muss er auf Zusatzinformationen zurückreifen, was die Informationsvermittlung verlangsamt. So hat der Nutzer für die Auswahl der Fahrtstrecke zu einem bestimmten Ort meist die Option, eine von drei alternativen Routen zum gewählten Ort auszuwählen. Die alternativen Verkehrsführungen werden dann als farbige Hervorhebung angezeigt und die Fahrzeiten werden in einer Legende angezeigt.

Hierzu werden teilweise ebenfalls die Fahrt- oder Reisekosten eingeblendet, soweit das Navigationssystem oder der Routenplaner diese Daten zur Verfügung stellt.

Im Handel bekannte und auf einem geografischen Maßstab beruhende Karten dienen dem vorteilhaften und schnellen Erfassen von relevanten Informationen wie die der Fahrtzeit somit nur unzureichend.

Neben den Im Handel bekannten Lösungen zur Erfassung des Faktors Fahrtzeit in herkömmlichen, geografischen Kartenansichten sind weitere Lösungen bekannt.

Bekannt sind isochrone Kartendarstellungen. Hier wird der Zeitaufwand, der zur Erreichung eines Ziels nötig ist, innerhalb einer gezeigten Karte farblich differenziert dargestellt. So erhalten Kartengebiete, die mit gleichem Zeitaufwand zu erreichen sind, jeweils eine einheitliche Einfärbung.

Die Darstellung des Faktors Fahrtzeit in einer isochronen Karte vereint zwar die geografische Karte mit einer Zeitdarstellung, indem die Flächen und Punkte gleicher Zeitentfernung um einen Anfangspunkt In einer identischen Farbe markiert wird, aber auch diese Art der Darstellung ist für durch die menschliche Wahrnehmung nicht unmittelbar zu erfassen, da in einem Suchprozess die farblich markierten Flächen erst Identifiziert, verglichen und sodann der geografischen Darstellung zugeordnet werden müssen.

Ebenfalls bekannt ist aus DE 100 46 000 A1 eine Darstellung der Fahrtzeit um einen gewählten Ausgangspunkt herum. Hierbei verzichtet die Darstellung auf die geografische, herkömmliche Darstellung zugunsten einer rein zeitabhängigen Darstellung der Ziele um einen gewählten Ausgangspunkt herum.

Die Darstellung einer reinen Zeitkarte wie bei DE 100 46 000 A1 dient somit der verbesserten Informationsaufnahme des Faktors Fahrtzeit um einen Ausgangspunkt nur unzureichend. Der Zuordnung der gewonnenen Informationen In dieser reinen Zeitkarte nämlich fehlt ein geographischer Orientierungsrahmen. Der Nutzer erhält eine Anzahl von Zielpunkten auf einer weißen Fläche. Der erlangte Vorteil wird somit wieder zunichte gemacht, als dass die Erfassung der Zielpunkte nun wieder dem Betrachter eine geistige Anstrengung abverlangt derart, dass er die Zielpunkte unter Zuhilfenahme weiterer Informationen wie einer herkömmlichen geografischen Karte erst zuordnen muss.

Ebenfalls bekannt aus EP 1 56 60 A1 ist eine Darstellung des Faktors Fahrtzeit In einer elektronischen Kartendarstellung In der Art, dass sich nach Auswahl eines Ausgangs- und eines Zielortes entlang der angezeigten Wegstrecke die markanten Kartenelemente wie Orts- und Straßenanzeige gemäß des Faktors Zeit verzerrt dargestellt werden. EP 1 56 60 A1 führt ebenfalls an, die geografische Darstellung der Wegstrecke und die zeitabhängige Darstellung der Wegstrecke in zwei Bildfenstern gleichzeitig und parallel anzuzeigen, um so eine vergleichende Erfassung der gezeigten Inhalte zu ermöglichen.

Nachteilig ist nach EP 1 56 60 A1 jedoch, dass die geografische Darstellung der Wegstrecke und die zeitabhängige Darstellung der Wegstrecke in zwei Bildfenstern gleichzeitig und parallel angezeigt werden, um so eine vergleichende Erfassung der gezeigten Inhalte zu ermöglichen. Die Darstellung In zwei Fenstern jedoch steht einer unmittelbaren und einheitlichen Erfassung im Wege. Zudem birgt sie den großen Nachteil, dass diese Form der Anzeige nur dann funktioniert, wenn die Verzerrung der Zeitdarstellung im Vergleich zu der herkömmlichen geografischen Darstellung sehr gering ausfällt. Berücksichtigt man bei einem Pkw mögliche Fahrgeschwindigkeiten von etwa 20 - 200 km/h, so würde die zeitbezogene Darstellung eines Gebiets, das wie bei einer Großstadt beispielsweise eine Autobahntangente, eine Zufahrtsstraße und einen verkehrsberuhigten Bereich umfasst, mit dem Faktor 10 einer dermaßen großen Verzerrung unterliegen, dass die Zeitkarte keinen vorteilhaften Informationsnutzen mehr bietet.

Im Ergebnis sind sämtliche Lösungen nach dem Stand der Technik unvorteilhaft für eine signifikante Verbesserung der Wahrnehmung des Faktors Zeit und anderer Zusatzinformationen in einer geografischen Karte.

Aufgabe der Erfindung Ist es, die bekannten Verfahren zu verbessern und ein Verfahren anzugeben, bei dem ein Nutzer unmittelbar erkennen kann, mit welchem Aufwand er von ihm ausgewählte Zielorte ausgehend vom Ausgangspunkt erreichen kann, insbesondere welche Fahrzeit er benötigen wird.

Diese Aufgabe wird gelöst durch das Verfahren nach Anspruch 1.

Nach dem Verfahren werden auf dem Bildschirm die Ortsdarstellung und die zweite Darstellung, z.B. Zeitdarstellung, gemeinsam und übereinander dargestellt. Der Zielort, dargestellt durch das Zielsymbol, ist für die Ortsdarstellung und die zweite Darstellung identisch. Ziel ist es, die Zielorte, die aufgrund des Auswahlkriteriums, z.B. Fahrtzeit, günstiger zu erreichen sind, In der zweiten Darstellung mit Zielsymbolen darzustellen, die näher als die entsprechenden Zielsymbole In der Ortsdarstellung am Startsymbol sind und solche Zielorte, die einen höheren Aufwand erfordern, weiter entfernt vom Startsymbol darzustellen als die zugehörigen Zielsymbole in der Ortsdarstellung. Vorzugsweise soll das Produkt aus Abstand, also beispielsweise Fahrtstrecke zwischen Ausgangspunkt und einem Zielort, mal Aufwand (beispielsweise Fahrtzeit, Kosten usw.) optimiert werden. Alternativ soll vorzugsweise nur der Aufwand minimiert werden. In der Ortsdarstellung ist der Maßstab der auf dem Bildschirm dargestellten topographischen Karte vorzugsweise konstant und ändert sich nicht mit der Entfernung vom Ausgangspunkt.

Durch die Anzeige des Zusammenhangs zwischen der Lage mindestens eines Zielsymbols In der Ortsdarstellung und des zugehörigen Zielsymbols in der zweiten Darstellung ist für den Benutzer unmittelbar ersichtlich, welche Zielorte günstiger sind, beispielsweise innerhalb einer gewissen Zeit zu erreichen sind und welche nicht. Insofern sind für die zweite Darstellung sogenannte Polarkoordinaten vorteilhaft. Das Zielsymbol der zweiten Darstellung befindet sich vorteilhafterweise auf einer Geraden, die das gemeinsame Startsymbol und das zugehörige Zielsymbol in der Ortsdarstellung (desselben Ziels) verbindet.

Vorteilhaft ist dabei, dass der Ausgangspunkt in der Ortsdarstellung mit dem Ausgangspunkt in der zweiten Darstellung übereinstimmt. Dadurch muss ein Benutzer sich nicht neu orientieren. Es wird In die Ortsdarstellung die zweite Darstellung einbezogen, der Benutzer muss nicht auf eine andere Darstellung blicken und sich auf diese einstellen.

Unter einer Ortsdarstellung wird eine Darstellung verstanden, wie sie auf einer Landkarte und auf derzeit im Handel befindlichen GPS-Geräten anzutreffen ist. Die Ortsdarstellung zeigt einen Ausschnitt aus einer topografischen Karte. Die Anzeige in der Ortsdarstellung erfolgt mit linearem Maßstab.

Der Nutzer erhält unmittelbar, überlagert zur Ortsdarstellung, eine Information, mit welchem Aufwand er die Zielorte erreichen kann.

Unter einem Datenverarbeitungsgerät wird der elektronische Teil eines GPS-Gerätes, eines Laptops, eines anderen Computers oder dergleichen verstanden. Der Bildschirm ist an das Datenverarbeitungsgerät angeschlossen und wird von diesem gesteuert. Der Bildschirm ist zum Beispiel der Bildschirm eines Laptops oder GPS-Gerätes. Die Eingabeeinheit ist mit dem Datenverarbeitungsgerät verbunden. Sie ist beispielsweise als Tastatur, Spracheingabe oder berührungsempfindlicher Teil eines Bildschirms ausgeführt. Über die Eingabeeinheit wird die Auswahl des Ausgangspunktes, die Auswahl mehrerer Zielorte, das Festlegen des Auswahlkriteriums usw. durchgeführt.

In einer Verbesserung ist es möglich, die Helligkeit und/oder den Informationsgehalt der einen Darstellung gegenüber der anderen zu reduzieren, damit die Gesamtdarstellung Insgesamt besser zu erfassen Ist. So kann z.B. der Informationsgehalt der Ortsdarstellung reduziert werden. Dies kann Insbesondere dann erfolgen, wenn erst einmal die Zielorte ausgewählt sind, es können dann unwichtige geografische Angaben entfallen.

Die zweite Darstellung ist insbesondere eine Zeitdarstellung. Vorzugsweise werden um das Zielsymbol Kreise mit unterschiedlichen Zeitabständen, beispielsweise 10, 20, 30 Minuten auf dem Bildschirm dargestellt, dies soll erkennbar machen, dass die innerhalb dieser Kreise liegenden Zielsymbole in der zweiten Darstellung Innerhalb der angegebenen Zelt erreichbar sind. Als zweite Darstellung sind auch andere Darstellungen möglich, beispielsweise Fahrtkosten, Eintrittskosten, Verkehrssituation usw..

Es wird ein Zusammenhang zwischen den beiden Symbolen mindestens eines einzelnen Symbolpaars, also eines Zielsymbols In der Ortsdarstellung und des zugehörigen Zielsymbols In der zweiten Darstellung, vorzugsweise aller Symbolpaare, angezeigt. Dadurch wird erreicht, dass der Benutzer einfach erkennen kann, welches der Zielsymbole einer Darstellung zum Zielsymbol In der anderen Darstellung gehört. Der Zusammenhang kann durch eine dargestellte Verbindungslinie, insbesondere Gerade, zwischen den Symbolen eines Paars erreicht werden. Andere Verdeutlichungen des Zusammenhangs sind möglich, z.B. unterschiedliche Anfärbung, verschiedenartige Symbole für unterschiedliche Paare usw..

Der im Patentanspruch 1 angegebenen Erfindung liegt zugrunde, die Verzögerungen bei der Vermittlung ortsgebundener Informationen in Straßenkarten bei der Suche und Auswahl von Zielorten zu vermeiden und insbesondere dem Anwender von Straßenkarten, wie sie für die Darstellung auf Monitoren in der Informationstechnologie verwendet werden, mehr entscheidungsrelevante Informationen in kürzerer für die Zielauswahl zu vermitteln.

Dem liegt die Erkenntnis zugrunde, dass die menschliche Wahrnehmung von gezeigten Inhalten einer Karte beschränkt Ist. Die Möglichkeiten der menschlichen Wahrnehmung sind durch seine physischen Gegebenheiten beschränkt und determinieren die Geschwindigkeit, mit der Informationen erfasst werden können auf der Skala von einer unmittelbaren Erfassung bis hin zu einer Erfassung, der eine Reihe von kognitiven Prozessen vorangehen muss, um sie zu gewährleisten.

So ist etwa der Blick auf eine analoge Uhr eine Darstellungsform der Zeit, deren Wahrnehmung für den Menschen direkt und unmittelbar funktioniert, sofern das Lesen der analogen Uhr einmal gelernt wurde. Die unmittelbare Wahrnehmung der analogen Uhrzeit wird unterstützt durch das geschlossene optische System der Uhr, bei der sich aus der Lage der Uhrzeiger auch ein sofort wahrnehmbares Bild der der Zelt ergibt. Eine entsprechend direkte Wahrnehmung wird mit der Erfindung angestrebt im Bereich der Kartensuche.

Werden also wie bei dem Blick auf die analoge Uhr zur Wahrnehmung keine weiteren kognitiven Prozesse nötig oder sind diese auf ein Minimum beschränkt, dann erfolgt die Erfassung schnell, intuitiv und unmittelbar. In allen anderen Fällen sind zur Wahrnehmung erst kognitive Prozesse notwendig, die die Auffassung und Wahrnehmung erschweren und verzögern. Beispiele hierfür sind die kognitive Anstrengungen um zwei Kartentypen unterschiedlichen Maßstabs miteinander zu vergleichen oder der bildlichen Kartendarstellung hinzugefügte numerische Zusatzinformationen zu lesen, zu bewerten und zu kombinieren.

Die Fähigkeit der menschlichen Wahrnehmung, die Geschwindigkeit und Effizienz der Erfassung von optischen Darstellungen wird durch eine Reihe von Faktoren bestimmt.

So ist im Fall der Wahrnehmung von bildlichen Inhalten einer Karte ein ausschlaggebender Faktor, ob die Karte mit einem Blick wahrgenommen werden kann oder ob der Blick erst auf zwei oder mehr Bildinhalte gerichtet werden muss oder ob diese auch noch in einem kognitiven Prozess verarbeitet werden müssen, um die Bildaussage zu erfassen.

Im Fall der Wahrnehmung von bildlichen Inhalten einer Karte ist ein weiterer ausschlaggebender Faktor, wie vorteilhaft die gezeigten Inhalte auf die Vorlage allgemein bekannter Bezugsmuster der menschlichen Wahrnehmung ausgestaltet sind.

So ist die bekannte, geografische Weltkarte mit der Anzeige der Kontinente eine allgemein gelernte und verinnerlichte Grundanschauung, die dem Menschen einen universellen Bezugsrahmen bietet. Ebenso ist der Mensch mit den Karten seines eigenen Landes und seiner Region auf gelernte Weise vertraut. Dies umfasst ebenso die allgemeingültigen Kartenelemente, welche sowohl vorhandene natürliche, geografische Elemente wie Meere, Flüsse und Wälder als auch die menschlich erschaffene Elemente wie Grenzen, Städte und Straßen abbildet. Dieser gelernte Bezugsrahmen bildet die Grundlage für die physische Erfassung der Inhalte einer Karte und determiniert die Geschwindigkeit, mit der einzelnen Elemente einer Karte erfasst werden können.

Verlässt man nun diesen geographischen Bezugsrahmen durch Aufgabe des allgemeingültigen, rein geometrischen Maßstabs zugunsten eines etwa rein zeitabhängigen Maßstabs, so kann sich die Wahrnehmung der Zeitkarte auf keine vergleichenden, gelernten Elemente des menschlichen Geistes berufen. Eine Schaffung eines allgemein lernbaren zeitlichen Bezugsrahmens In der Kartendarstellung wie die der allgemein gültigen geografischen Karten ist auch gar nicht möglich, da der Maßstab Zeit stets eine relative Anzeige ist, die sich je nach flexibel gewähltem Ausgangspunkt und weiteren Faktoren wie die der aktuellen Verkehrslage ändert.

Für die erfindungsgemäße Lösung werden diese Erkenntnisse aus der Wahrnehmungspsychologie genutzt.

Die mit der Erfindung erzielten Vorteile bestehen insbesondere darin, den Anwender In die Lage zu versetzen, unter Verwendung einer Kartendarstellung anhand bestimmter auch kombinierbarer Kriterien eine bildhafte Darstellung der bevorzugten Zielorte In der Karte zu erhalten, wobei anstelle bzw. zusätzlich zu der maßstabsgetreuen Darstellung der Entfernungen der ausgewählten Zielpunkte zum Ausgangspunkt eine Darstellung verwendet wird, welche die Zielpunkte nach anderen Kriterien als denen der Entfernung abhängig zum Ausgangspunkt darstellt. Hierbei wird jedoch die Kartendarstellung gemäß dem allgemein bekannten, geografischen Maßstab weiterhin, vorteilhafter Weise nicht vollständig aufgegeben. Diese fungiert für die menschliche Erfassung und Wahrnehmung vielmehr als Orientierungs- und Bezugsrahmen für die auf Basis eines weiteren, wie etwa eines Zeitmaßstabs, erfolgende Lageveränderung der ausgewählten Ziele. Da somit zwei oder mehr Darstellungen in einer einzigen Ansicht berücksichtigt werden, erfolgt eine visuelle Verdichtung von relevanten Informationen um einen individuell gewählten Ausgangspunkt herum in einem einzigen Bild- oder Kartenausschnitt auf einem Monitor und die Informationen sind somit auf einen Blick zu erkennen und zu erfassen. Eine Anzeige von zwei oder mehr Darstellungen in zwei oder mehr getrennten Kartenansichten entfällt. In seiner Funktion als der vorteilhaften Wahrnehmung unterstützenden Bezugsrahmens im Moment der Lageveränderung ausgewählter Ziele kann die bekannte geografische Karte bildlich reduziert werden durch Selektion und Reduktion auf etwa wenige markante Elemente.

So können die Zielpunkte nach den bevorzugten Kriterien angeordnet werden und der Anwender kann die ihm relevanten Kriterien der Zielpunkte leichter vergleichen. Für die Anzeige des Zeit- oder Kostenaufwandes zur Erreichung der angezeigten Zielpunkte muss der Anwender nicht auf textbezogene Angaben zurückgreifen, sondern kann anhand einer lageveränderten Darstellung der Ziele bzw. ihrer Symbole in der Anzeige die Aufwendungen zur Zielerreichung visuell mitelnander vergleichen.

Für die ausgewählten Ziele wird zusätzlich eine andere Darstellung als die geometrische Darstellung zugrunde gelegt und die Ziele werden zusätzlich gemäß zumindest einer zweiten Darstellung angezeigt, ohne dass der geometrische Maßstab der restlichen Karte verändert wird. Die Darstellung der Ziele ist im Falle des Auswahlkriteriums Zelt die zur Zielerreichung benötigte Zeit, im Falle des Auswahlkriteriums Fahrtkosten die zur Zielerreichung benötigten Fahrtkosten.

Zeit und Kosten sind zwei Faktoren bzw. Auswahlkriterien, die grundsätzlich jeder Fortbewegung mit einem Verkehrsmittel zu einem Ziel innewohnen und somit von zentraler Bedeutung für die Beurteilung und Auswahl von Zielen sind. Die Wahl des Verkehrsmittels beeinflusst die Ausgestaltung der Faktoren Zeit und Kosten maßgeblich. Selbst wenn bei der Fortbewegung auf ein Ziel auf ein herkömmliches Verkehrsmittel verzichtet wird und stattdessen ein kostenfreier Fußmarsch erfolgt, kann diesem ein Kostenbetrag durch Materialverschleiß oder durch die Entstehung kalkulatorischer Opportunitätskosten zugeordnet werden.

Zur Zielsuche und Zielerreichung sind aber neben dem Verkehrsmittel ebenfalls weitere Komponenten von Bedeutung wie die Wegstrecke zu einem Ziel und das Ziel an sich.

Es können somit weitere Darstellungen zur Anzeige gebracht werden, die sich nach individuellen, auch subjektiven Attributen bzw. Auswahlkriterien richten, soweit diese in einen numerischen Maßstab transformierbar sind. Somit können alternativen Ziele und auch die Wegstrecken unterschiedlich attraktiv wahrgenommen werden. Diese Attraktivität kann numerisch bewertet werden und somit ebenfalls als Maßstab für die Darstellung der Zielerreichung fungieren.

Das erfindungsgemäße Verfahren ermöglicht es dem Nutzer, eine Wahl von verschiedenen Zielorten in Abhängigkeit der Fahrkosten oder Fahrtzeiten oder anderer Auswahlkriterien für verschiedene Verkehrsmitteln oder deren Kombination anhand der visuellen Darstellung zu erhalten, wobei die Ortsentfernung dann in Abhängigkeit zu den Fahrtkosten und/oder Fahrtzeiten dargestellt wird. In einer möglichen Erweiterung wird ebenfalls die Attraktivität des Ziels und / oder der Wegstrecke dorthin ebenfalls numerisch erfasst und in einen einheitlichen Maßstab zusammengefügt. Somit erhält der Nutzer neben der reduzierten geografischen Kartendarstellung eine dieser Darstellung überlagerten, einzigen Zielpunktedarstellung gemäß einer einheitlich skalierten Zusammenfügung unterschiedlicher weiterer Darstellungen wie Zeit- und/oder Kostendarstellung und/oder Wegstreckenattraktivität und/oder Zielattraktivität (und/oder weiteren Eigenschaften). Hierbei kann der Nutzer die Auswahl der zu berücksichtigen Faktoren gemäß seiner individuellen Nutzerpräferenz selbst festlegen und individuell gewichten.

Eine weitere vorteilhafte Ausgestaltung der Erfindung besteht darin, die Eigenschaften der Ziele gemäß ihrer Vortellhaftlgkeit bildlich visuell hervorzuheben. Handelt es sich bei den Zielen beispielsweise um Hotels, so wird deren Vorteilhaftigkeit etwa durch den Preis, die Ausstattung, die Klassifikation und die Hotelgästebewertungen ausgedrückt. Diese Eigenschaften können einzeln oder kombiniert oder kombiniert gewichtet in einem einzigen Symbol wie etwa einem Kreis angezeigt werden, wobei der Kreis das Ziel ausdrückt und der Kreisdurchmesser die Vorteilhaftlgkelt des Ziels, wobei ein zunehmender Kreisdurchmesser die zunehmende Vorteilhaftigkeit des Ziels ausdrückt. Eine weitere Ausgestaltung der Erfindung ist, dass bei der Suche nach mehreren Arten von Zielen wie beispielsweise Hotels und Sehenswürdigkeiten und Restaurants jeder Art von Ziel ein eigenes visuelles Symbol zugeordnet wird, um die Arten von Zielen auf einen Blick voneinander unterscheiden zu können. Da Symbole dieser Art allgemein bekannt sind und deren Ausgestaltung in sich verändernder Größe intuitiv erfassbar ist, dient diese verdichtete visuelle Darstellung der schnellsten Wahrnehmung der Vorteilhaftigkeit der Ziels.

Eine weitere vorteilhafte Ausgestaltung der Erfindung markiert die Vorteilhaftigkeit einer zur Zielerreichung ermittelten Wegstrecke durch eine symbolisch bildlich visuelle Markierung dieser Wegstrecke. Dabei wird etwa die Attraktivität von Wegstrecken numerisch erfasst und die Wegstrecken entsprechend markiert, indem mit zunehmender empfundener Attraktivität der Wegstrecken diese mit zunehmender Farb- oder Strichintensität markiert werden.

Das erfindungsgemäße Verfahren ermöglicht es dem Nutzer somit, Ziele schnell und effizient zu finden, zu erfassen und zu beurteilen, auch wenn eine Vielzahl von Zielen und zielbeeinflussender Parameter vorliegt. Von Vorteil ist dabei auch eine Verschiebung der visuellen Zieldarstellung um einen Ausgangspunkt in die Bildmitte des Darstellungsmediums bzw. Bildschirms. So ist etwa der Aufwand zur Erfassung der tatsächlichen Zeitdauer zur Zielerreichung von Hotels rund um einen gewählten Ausgangspunkt bei Vorlage einer hohen Anzahl verfügbarer Hotels bereits sehr hoch. Bei gleichzeitiger Berücksichtigung von den Fahrtkosten zur Erreichung der einzelnen Hotels steigt der Aufwand weiter signifikant an. Bei der Hinzunahme weiterer Auswahlkriterien rund um den Hotelaufenthalt wie Hotelpreis, Hotelattraktivitätsbewertung, Hotelausstattung steigt der weitere Aufwand jedoch nicht linear, sondern überproportional bis hin zu exponentlell an und ist daher bei Hinzunahme weiterer Kriterien ab einem gewissen Punkt gar nicht mehr zu bewerkstelligen. Durch die Verdichtung und Visualisierung der Daten in einem einzigen Kartenausschnitt auf einem Monitor gemäß dem erfindungsgemäßen Verfahren kann der Nutzer jedoch die Vorteilhaftigkelt des gewählten Ziels, im Beispielsfall ein Hotel auf einen einzigen Blick erkennen und erfassen.

Ausführungsbeispiele der Erfindung, die nicht einschränkend zu verstehen sind, werden im folgenden anhand der Zeichnung erläutert und näher beschrieben. In dieser Zeichnung zeigen
Fig. 1 eine Darstellung einer topographischen Karte auf einem Bildschirm,
Fig. 2 die Darstellung gemäß Figur 1, In die zusätzlich ein Ausgangspunkt und mehrere Zielsymbole für die Zielorte eingefügt sind,
Fig. 3 eine Darstellung nur des Ausgangspunktes und der Zielsymbole aus Fig. 2,
Fig. 4 die Darstellung wie Figur 3 und zusätzlich in einer Zeitdarstellung die Lage der Zielsymbole für die Zielorte in der Zeitdarstellung, also in Abhängigkeit Ihres zeitlichen Abstandes vom Ausgangspunkt, dabei sind die beiden Zielsymbole jedes Ziels in den unterschiedlichen Darstellungen durch eine gerade Linie miteinander verbunden,
Fig. 5 die Darstellung wie Figur 4, jedoch sind nun zusätzlich um das Startsymbol Kreise eingezeichnet, die einem zeitlichen Abstand vom Startsymbol entsprechen,
Fig. 6 eine Darstellung ähnlich Fig. 5 mit veränderten Zielsymbolen,
Fig. 7 die Darstellung gemäß Figur 1 überlagert mit der Darstellung gemäß Figur 4,
Fig. 8 die Darstellung gemäß Figur 5 vor einer einen blassen Hintergrund bildenden Darstellung gemäß Figur 1, die zudem reduziert ist im Aussagegehalt,
Fig. 9 die Darstellung gemäß Figur 4 vor einer einen blassen Hintergrund bildenden Darstellung gemäß Figur 1, die zudem in ihrem Aussagegehalt vermindert ist, und
Fig. 10 eine Darstellung gemäß Figur, vor einer einen blassen Hintergrund bildenden Darstellung gemäß Figur 1, die zudem in ihrem Aussagegehalt vermindert ist und bei der ausgewählte Startpunkt in der Mitte des Monitors befindet bzw. zentriert Ist.

Für die lageveränderte Darstellung legt der Anwender zunächst einen Ausgangspunkt 1 fest. In elektronischen Karten 2 ist die Darstellung variabel, denn der Ausgangspunkt 1 kann jederzeit verändert bzw. verschoben werden. Er kann dem aktuellen Ort entsprechen oder willkürlich festgelegt werden. Für den Fall, dass die erfindungsgemäße Darstellung auf einer vorgedruckten Karte 2 erfolgt, werden für die Anzeige des Ausgangspunktes 1 insbesondere bedarfstypische Orte wie Messen, Flughäfen, Bahnhöfe, öffentliche Plätze, touristische Informationsbüros etc. gewählt, wo die Karten 2 mit der veränderten Darstellung der Zielorte 3 dann typischerweise in Papierform ausgegeben und verwendet werden.

Als Karten 2 kommen alle maßstabsbezogenen Kartentypen in Betracht, nämlich Straßenkarten, Stadtpläne, Wanderkarten, etc. Nach einer Bestimmung eines Ausgangspunktes 1 und dessen Anzeige bzw. Symbol 4 in der Karte 2, werden die anzuzeigenden Zieleorte 3 und die Aufwandskriterien 5 bestimmt.

Anzuzeigende Zielorte 3 können Städte und Ortschaften sein, ortsgebundene Einrichtungen wie Hotels, Restaurants, Bars, Geschäfte, Tankstellen, Museen, Sehenswürdigkelten, Spielplätze, Versorgungseinrichtungen, etc.

Als Vorgaben für die Festlegung der Aufwandskriterien bzw. Auswahlkriterien 5 eigenen sich vor allem die Fahrtzeit und die Fahrtkosten. Es können allerdings auch andere Kriterien 5 wie Verkehrsdichte, Attraktivität der Fahrtstrecke, Attraktivität des Ziels etc. einzeln oder In Kombination in Frage kommen.

Die Zielorte 3 werden daraufhin in einer maßstabsgetreuen Darstellungsvariante 6 In der Karte 2 mittels Hervorhebungen bzw. Zielsymbole (in der 1. Darstellung) 7 angezeigt. Durch die Wahl einer zweiten veränderten Darstellung 8 werden die Lagen der angezeigten und hervorgehobenen Zielorte 3 in Relation zu den gewählten Aufwandskriterien 5 durch eine zweite Hervorhebung bzw. Zielsymbole (in der 2. Darstellung) 9 angezeigt. Dafür werden in Relation zum Aufwandskriterium 5 die Zielorte 3 auf einer graden Strecke 10 zum Ausgangspunkt 1 entweder näher 11, mit gleicher Lage 11 oder weiter entfernt 12 zum Ausgangspunkt 1 angezeigt. Zielorte 3, die mit geringerem Aufwand erreichbar sind, als der Aufwand, der ihrer maßstabsgetreuen Lage 6 In der Ortsdarstellung entspricht, werden dementsprechend näher zum Ausgangspunkt 1 dargestellt. Zielorte 3, die mit höherem Aufwand zu erreichen sind, dementsprechend weiter. Die Entfernung für die veränderte Darstellung 8 der Zielorte 3 wird im Verhältnis nach dem gewählten Aufwandskriterium 5 oder durch eine Kombination aus mehreren Aufwandskriterien 5 bestimmt. Für die bessere Orientierung werden die so bestimmten Entfernungen Intervallschritten zugeordnet, so dass sie mittels konzentrischer Kreislinien 13 In der Karte 2 darstellbar sind, wobei der Ausgangspunkt 1 zugleich die Lage des Kreismittelpunktes angibt.

Für die Vermittlung der Informationen betreffend den konkreten Aufwand zu einzelnen Zielorten 3 werden die veränderten Ortslagen 8 er In einem auf Waschbildern innerhalb der zugeordneten Kreisintervalle 14 angezeigt. Von Vorteil Ist es dabei, die Lageveränderung durch eine Verbindungslinie 15 zwischen der maßstabsgetreuen Ortslage 6 und der aufwandsbezogenen Ortslage 8 darzustellen, wobei die Annährung zum Ausgangspunkt 1 und das Abrücken vom Ausgangspunkt intuitiv erkennbar gemacht werden. Die Verbindungslinie 15 kann dafür durchgezogen oder gestrichelt ausgeführt oder farblich codiert sein, Pfeilsymbole aufweisen, welche die Richtung der Veränderung anzeigen, oder eine andere signifikante Darstellungsform aufweisen. Auch können die ursprünglichen maßstabgetreuen Ortslagen 6 transparent oder mit einer anderen Farbe dargestellt werden. Das Verfahren berücksichtigt vorzugsweise für die Bestimmung des Aufwands alle zur Verfügung stehenden Informationen zu den Verkehrsbedingungen, insbesondere die aktuelle Verkehrssituation, Wetterverhältnisse und andere Bedingungen, die Einfluss auf das gewählte Aufwandskriterium 5 haben können. Während sich die Zielorte 3 aufwandsbezogen neu anordnen, tritt die geografische maßstabgetreue Kartendarstellung 16 visuell in den Hintergrund etwa durch eine Beschränkung auf wenige markante geografische Orientierungselement 17 oder durch eine weitere bildlich visuelle Reduktion.

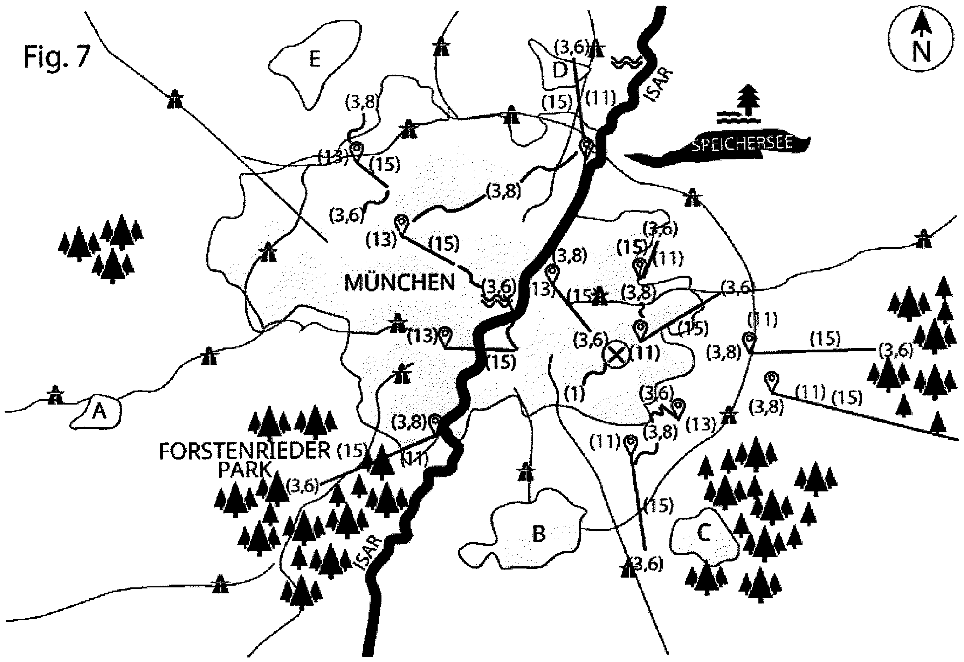

Nach einer vorteilhaften Ausgestaltung erfolgt die Lageveränderung der Zielorte 3 nach erfolgter Wahl des Aufwandskriteriums 5 dynamisch, so dass die Lageveränderung der Zielorte 3 nach dem geometrischen Maßstab 6 zur ihrer veränderten Lage als Bewegung erfolgt, welche auf dem Bildschirm dargestellt wird und somit den Betrachter in die Lage versetzt die Vorteilhaftlgkeit eines etwa zuvor nicht berücksichtigten Zielortes 3 schneller und nachhaltiger zu erfassen. Der Betrachter sieht ein kurzes Video oder eine andere grafische, elektronische, visuelle Animation mit einer Dauer von z.B. maximal In 1 Minute, allenfalls in maximal 3 Minuten. Danach sieht er die Anzeige wie in Figur 7.

Nach einer vorteilhaften weiteren Ausführung kann nach der Bestimmung des Ausgangspunkts 1 eine Selektion der zur Verfügung stehenden Verkehrs- und Fortbewegungsmittel erfolgen. Die individuelle Auswahl der Fortbewegungsmittel bildet dann die Grundlage der Fahrtkostenberechnung für das Aufwandskriterium 5 Fahrtkosten. Die Auswahl kann sich beschränken auf ein einzelnes Verkehrsmittel wie PKW oder eine Kombination aus verschiedenen Verkehrsmitteln wie Flugzeug, Bahn, öffentlicher Nahverkehr, Taxi, Fahrrad, Fußgänger, etc. Hierbei kann vorteilhaft eine Ausgestaltung der Kombination der Verkehrsmittel gemäß einer Fahrtkostenoptimierung erfolgen. Die Kombination der Verkehrsmittel wird so berechnet und angezeigt, dass sich Im Ergebnis der günstigste Gesamtpreis ergibt.

Nach einer weiteren vorteilhaften Ausgestaltung der Erfindung werden die lageveränderten Zielorte mit Symbolen 1 angezeigt, wobei Größe des einzelnen Symbols 1 eine Vorteilhaftigkeit der Zielorte 3 berücksichtigt. Unterschiedliche Arten von Zielorten 3 können durch als jeweils einheitliche Symbole 1 gekennzeichnet werden.

Nach einer weiteren vorteilhaften Ausgestaltung können neben der Berücksichtigung der Fahrtkosten verschiedener Verkehrsmitteln als Aufwandskriterium 5 auch individuellen Opportunitätskosten in die Fahrtkostenberechnung einbezogen werden. Beispielsweise definiert die Fahrtzeit zu einem Ziel eine Zeit, die anderweitig nicht genutzt werden kann und somit mit einem individuellen Kostenbetrag, welcher In die fahrtzielbezogene Gesamtfahrtkostenberechnung eingeht, angesetzt wird.

Eine weitere vorteilhafte Ausgestaltung ermöglicht die lageveränderte Darstellung der Zielorte 3 nach einem Aufwandskriterium 5, das um weitere Aufwandskriterien 5 und weitere zielbeeinflussende Komponenten vom Nutzer erweitert Ist. So kann neben der fahrtkostenabhängigen Zieldarstellung die Komponente der zeitabhängigen Zieldarstellung berücksichtigt werden. In einer Variante werden die ausgewählten Zielorte 3 gemäß den Fahrtkosten lageverändert angezeigt und in einer weiteren anwählbaren Variante werden die Zielorte 3 lageverändert nach dem Kriterium 5 des Zeitaufwands angezeigt. Für eine weitere Variante kann der Nutzer die einzelnen Aufwandskriterien 5 gleichrangig oder unterschiedlich für deren Kombination gewichten und so eine Variante der lageveränderten Zielorte 3 nach den kombinierten Aufwandskriterien 5 in einer einzigen Darstellung erzeugen.

Gemäß einer weiteren Ausgestaltung der Erfindung erstreckt sich die lageveränderte Anzeige der Zielorte auf eine Auswahl von unterschiedlichen Arten von Zielorten 3 sowie deren Individuelle Kombination und auch dem Ausschluss individueller Zielorte 3.

Zur besseren intuitiven Wahrnehmung ist es nach einer weiteren Ausgestaltung der Erfindung vorgesehen, dem Anwender eine Lageveränderung des Ausgangspunktes 1 und der dargestellten Zielorte 3, samt der Karte 2 zu ermöglichen. Je nach individueller Präferenz kann der Ausgangspunkt 1 zentriert oder an anderer Stelle auf dem Bildschirm angezeigt werden.

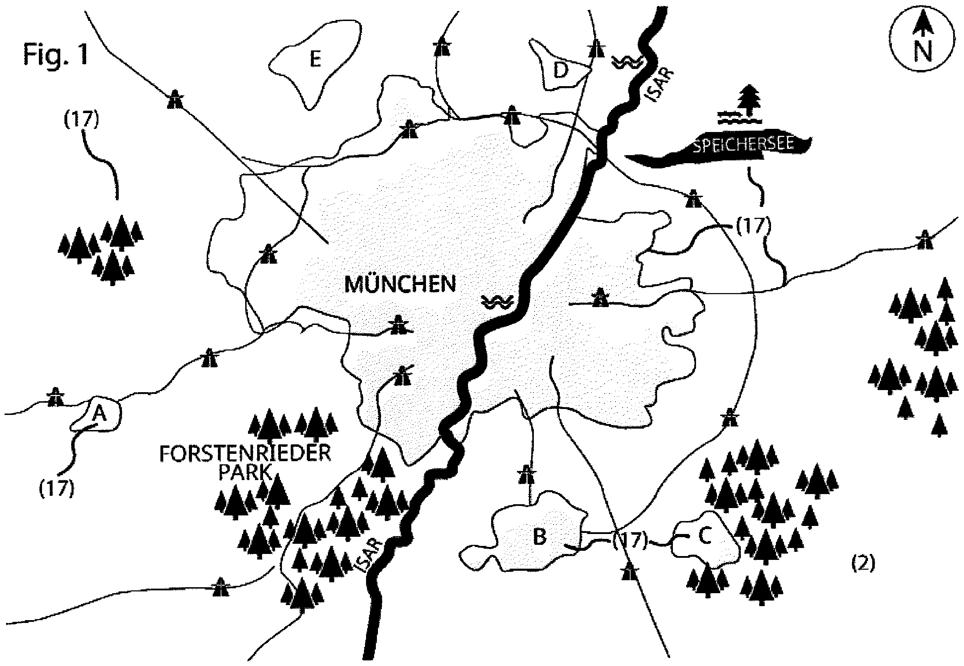

Die in der Fig. 1 wiedergegebene maßstabgetreue Karte 2 zeigt die Entfernungen zwischen verschiedenen Städten, die Lage von Flüssen und See, die Ausmaße einer Stadt und den Verlauf und die geografische Lage der Straßen als geografische Orientierungselemente 17 maßstabgetreu. Die Karte 2 in Fig. 1 entspricht einer herkömmlichen maßstabgetreuen Karte 2, die von jedermann gelesen und verstanden werden kann. Die Ortslagen sind maßstabgetreu wiedergegeben. Es gelten die bekannten Kilometerangaben In einen Maßstab umgesetzt. Die typischen Elemente einer Karte 2 werden anhand von Symbolen repräsentiert, die je nach Kartentyp in einer zusätzlichen Legende erklärt werden, auf deren Darstellung hier jedoch verzichtet wurde. Jedermann vermag die Karte zu lesen und kann daraus ableiten, dass die räumlichen Entfernungen der Orte zueinander unterschiedlich sind und über welche Straße er In bestimmte Orte gelangen könnte.

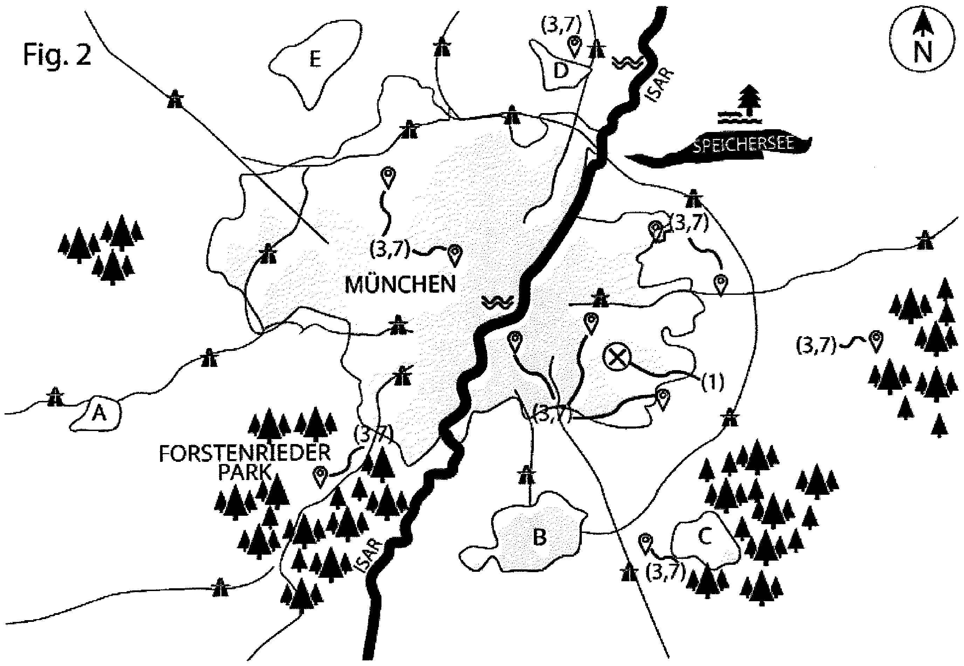

Fig. 2 zeigt die maßstabgetreuen Hervorhebungen 7 Zielorte 3 in der Karte 2. Fig. 2 zeigt dieselbe Karte 2 wie Flg. 1. Die Darstellung ist um eine Anzeige der infrage kommenden Zielorte 3 und die Anzeige des Ausgangspunktes 1 ergänzt. Die Zielorte 3 können individuell nach bestimmten Kriterien ausgewählt sein Orte, Sehenswürdigkeiten, Hotels, Restaurants etc.. Sie werden elektronisch angezeigt durch Hervorhebungen 7 und sind in der Fig. 2 durch ein tropfenförmiges Symbol repräsentiert. Ihre Darstellung in der Karte entspricht Ihrer tatsächlichen räumlichen Lage 12 genauso, wie die Lage des Ausgangspunktes 1.

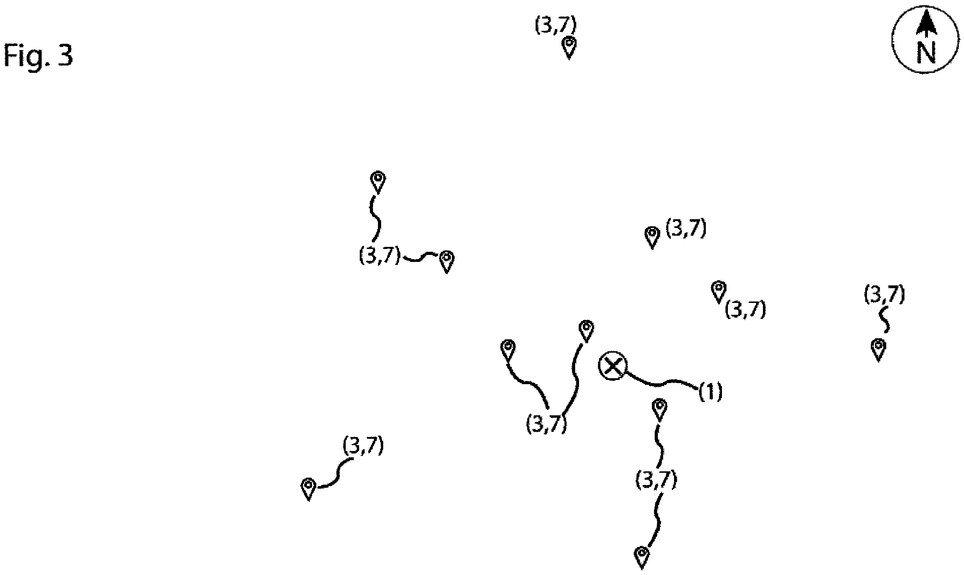

Fig. 3 zeigt die maßstabgetreuen Hervorhebungen 7 Zielorte 3 ohne Karte 2. Fig. 3 zeigt die unveränderte Lage der Zielorte und deren Hervorhebung 3, 7 und die Ausgangspunktes 1 losgelöst von der Darstellung der Karte 2. Die Anordnung der Zielorte 3 erklärt sich dem Betrachter in dieser Darstellung nicht. Ihm würde erste eine Orientierung anhand der geografischen Orientierungselemente 17, wie sie typischerweise in Karten 2 gezeigt werden weiter helfen. Zwar könnte der Betrachter anhand der Abstände zwischen Ausgangspunkt 1 und Zielort 3 auf eine Entfernung rückschließen, die zu den anderen Zielorten 3 unterschiedlich scheint. Dies würde jedoch eine besondere Interpretation der Darstellung erfordern.

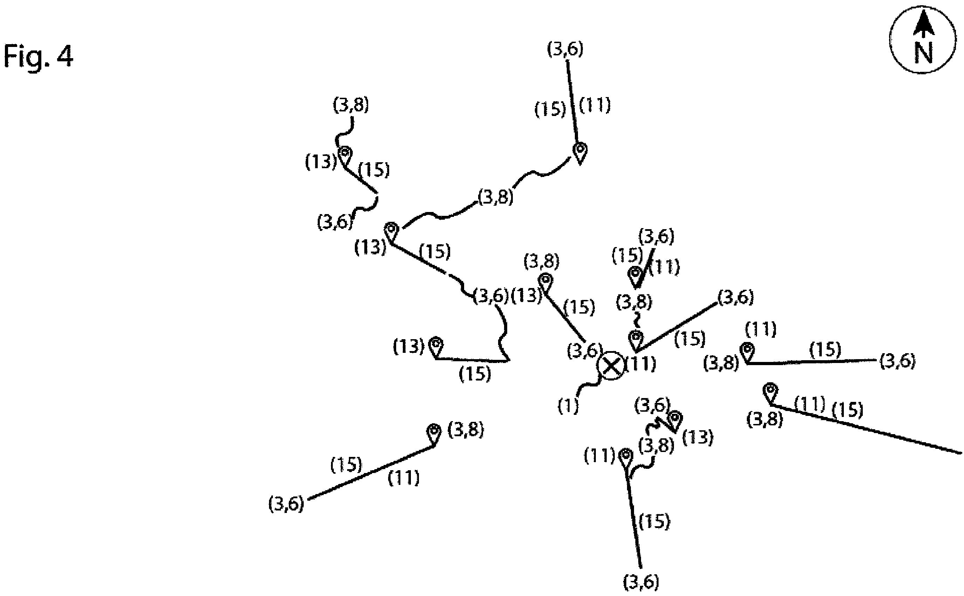

Flg. 4 zeigt die veränderten Zielorte 8 ohne Karte 2. In Fig. 4 wird die Darstellung der Zielorte 3, 6 und des Ausgangspunktes 1 wie In Fig. 3 verwendet, um die Lageveränderung der Zielorte 3, errechnet aus dem Aufwandskriterium 5 zu zeigen. Zielorte 3, die nach dem gewählten Aufwandkriterium 5 eine günstigere Lage zum Ausgangspunkt 1 haben werden näherliegend 11 zum Ausganspunkt 1 dargestellt. Zielorte 3, deren Lage nach dem gewählten Aufwandskriterium 5 als ungünstiger einzustufen ist, werden weiter entfernt liegend 13 dargestellt. Der Abstand der veränderten Lage zur ursprünglichen Lage 6 wird durch eine Verschiebungslinie 15 markiert.

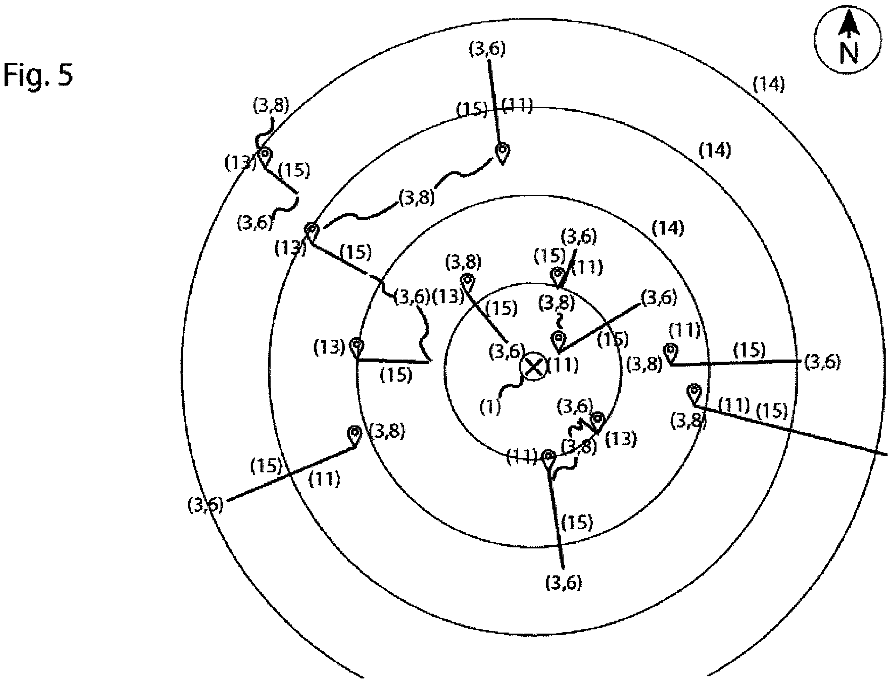

Fig. 5 zeigt die veränderten Zielorte 8 mit Kreislinien 14 ohne Karte 2. Fig.5 zeigt alles, wie zu Fig. 4 beschrieben. Die Darstellung Ist um die Kreislinien 14 ergänzt, welche die Zuordnung eines oder mehrerer Zielorte 3 zu einem bestimmten Intervallschritt zwischen den Kreislinien 14 erleichtert.

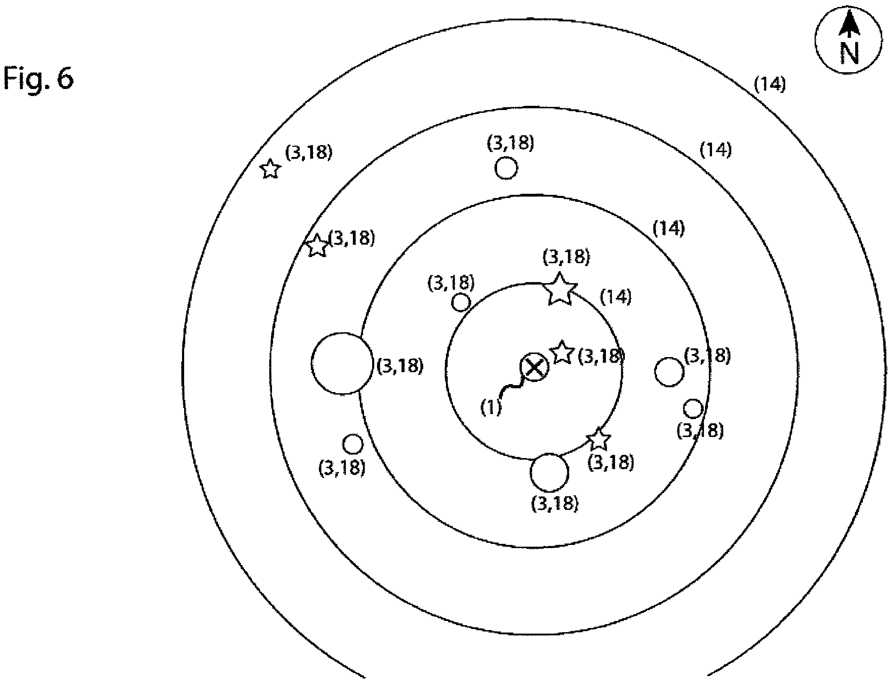

Fig. 6 zeigt die veränderten Ziele mit Symbolen 1. Fig. 6 zeigt die lageveränderte Darstellung der Zielorte. Zur Hervorhebung der lageveränderten Zielorte 3, 9 werden verschiedene Symbole 1 verwendet, welche die Qualität und die Art des Zielortes 3 identifizieren.

Fig. 7 zeigt die veränderten Zielorte 8 mit Karte 2. Fig. 7 veranschaulicht schließlich eine lageveränderte Darstellung der Zielorte 3, 9 mit den Verschiebungslinien 15 wie zu Fig. 4 beschrieben. Die in Fig. 4 verwendete Darstellung der Zielorte 3, ist über eine Karte 2 nach Fig. 1 als Hintergrund gelegt, so dass die maßstabgetreue Lage 6 der Zielorte 3 in der Karte exakt lokalisiert werden kann. Die günstigeren Zielorte sind In Richtung des Ausgangspunktes 1 verschoben und können aus der Kartenlogik als näher oder günstiger identifiziert werden, während die weiter entfernt liegend Zielorte 3, , 13 als entfernt und ungünstiger verstanden werden.

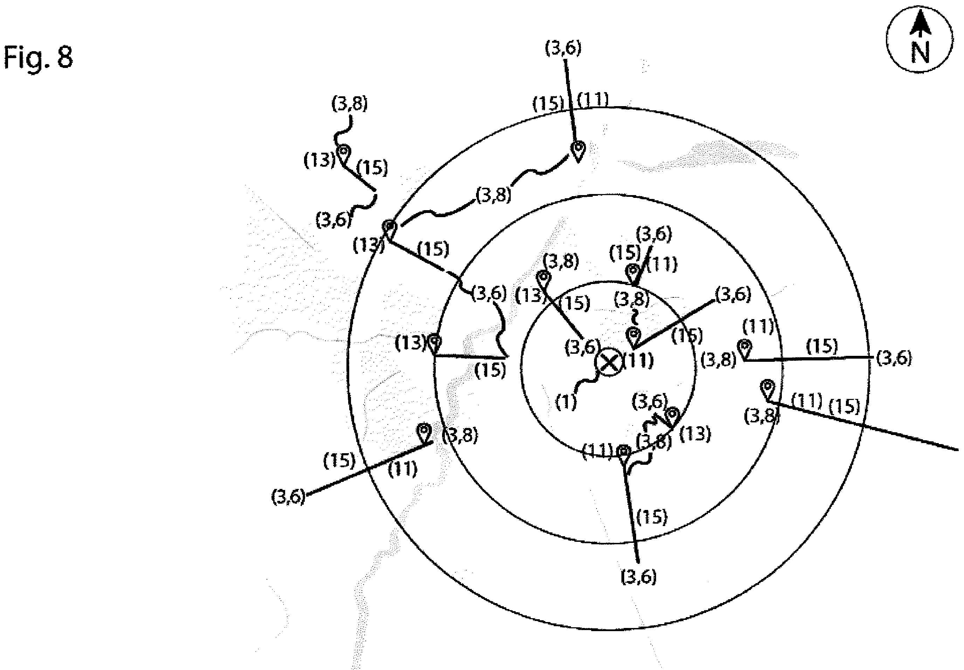

Flg. 8 zeigt die Karte 2 als Hintergrund mit verringerter Bildinformation. Fig. ist eine Anzeige der Karte 2 nach Fig. 1, wie sie für die visuelle Wahrnehmung reduziert als Hintergrund verwendet wird. Die Anzahl der geografischen Orientierungselemente 17 Ist verringert und die Abbildung ist für eine Wiedergabe aufgehellt. Die veränderte Lage der Zielorte 3, sowie deren geografischen 3, 6 Lage mit Anzeige der Verbindungslinien 15 wie in Flg. 5 ist darübergelegt.

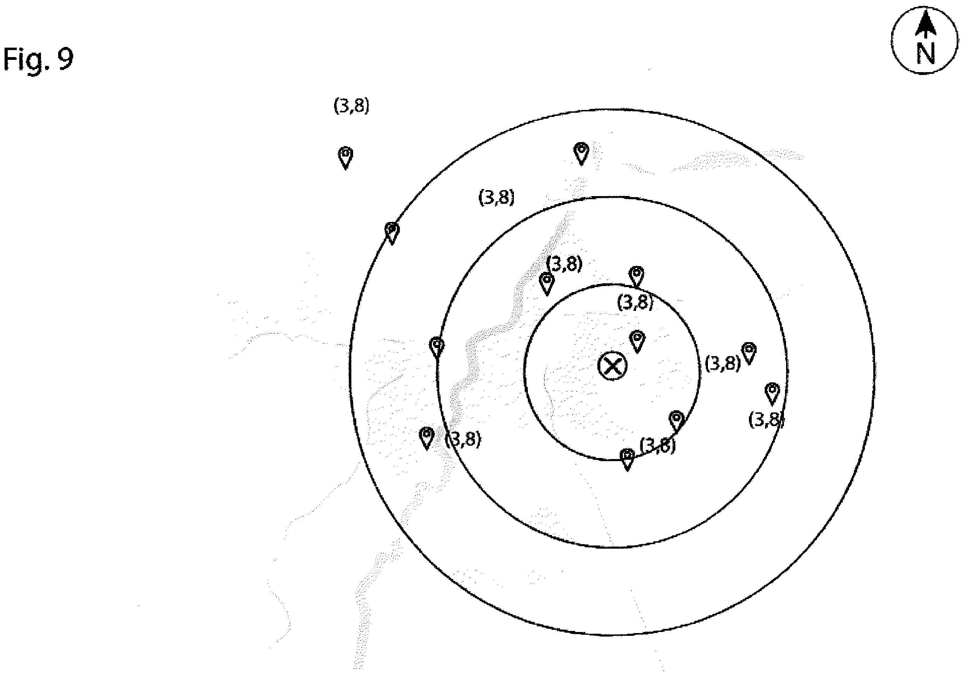

Fig. 9 entspricht Fig. 8 mit Zielorten 3, 8 und Kreislinien 14. Fig. 9 ist ähnlich der Fig. eine Anzeige der Karte 2 nach Fig. 1, die für die visuelle Wahrnehmung reduziert als Hintergrund verwendet wird. Die Anzahl der geografischen Orientierungselemente 17 ist verringert und die Abbildung ist für eine Wiedergabe aufgehellt. Die veränderte Lage der Zielorte 3, und eine Darstellung der Kreislinien 14 ist darübergelegt.

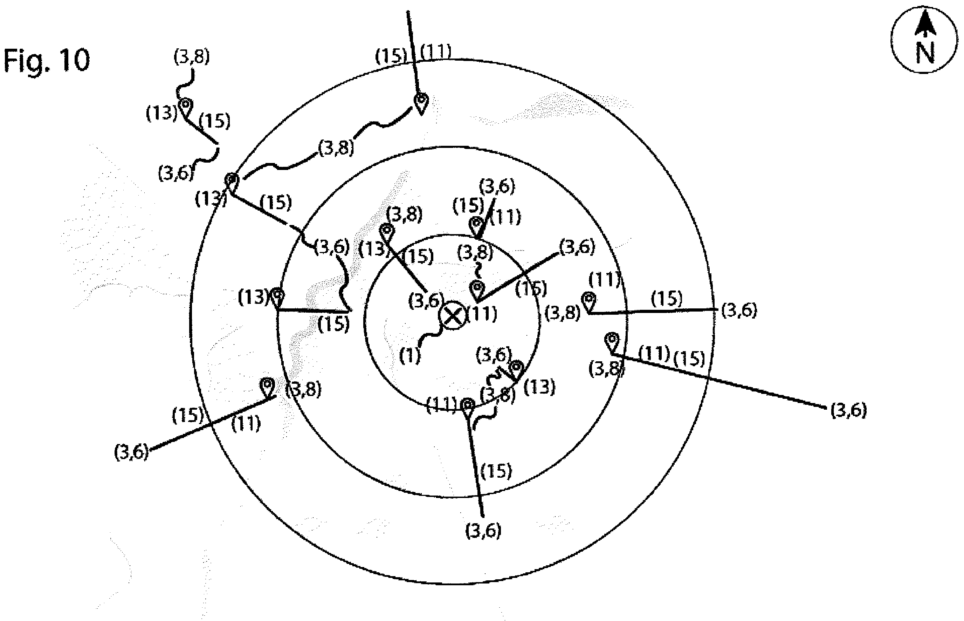

Fig. 10 zeigt die Karte 2 mit Zielorten 3, 8 um einen zentrierten Ausgangspunkt 1. Fig. 10 zeigt Flg. ergänzt um den Verfahrensschritt einer zentrierten Darstellung des Ausgangspunktes 1.

Bei dem Verfahren für die veränderliche Wiedergabe bestimmter Zielorte 3 in einer topografischen Karte 2, erfolgt eine Auswahl oder Vorgabe eines Ausgangspunktes 1, dieser wird markiert in der Karte 2 dargestellt. Vorzugsweise wird er zentriert In der Karte 2 dargestellt. Es werden nach einer Vorgabe für die anzuzeigenden Zielorte 3 die Ortslagen, welche mit den Zielvorgaben übereinstimmen 6, ebenfalls In dem verwendeten Karteausschnitt hervorgehoben 7. Es werden für die Wahl einer Anzeige der Zielorte 3 in einem anderen Kartenmaßstab als dem des räumlichen Kartenausschnitts, Aufwandskriterien 5 dafür ausgewählt und anhand von ortsrelevanten Informationen dem geänderten Maßstab zugrunde gelegt. Es wird die daraus ermittelte veränderte Lage der angezeigten Zielorte 3 dann in Abhängigkeit zum gewählten Ausgangspunkt 1 bildlich dargestellt, ohne dass der geometrische Maßstab der Karte 2 ansonsten verändert wird. Es wird für die Darstellung der veränderten Lage in der Karte 2 die Karte 2 vorzugsweise aufgehellt, unschärfer wiedergegeben, reduziert und/oder auf andere Welse im Informationsgehalt verringert. Aufgrund der grafisch-Inhaltlichen Reduktion der ersten Ausgangskarte, insbesondere wenn diese mit der Zeitdarstellung überlagert ist, wird der Nutzer weniger belastet. Durch die Kombination aus beiden Karten und folgender Animation, Selektion, Reduktion und schließlich Zentrierung beider Karten wird ein gut erfassbarer Inhalt erreicht.

### Bezugszeichenliste

1. Ausgangspunkt
2. Karte
3. Zielorte
4. Anzeige Ausgangspunkt, Symbol für den Ausgangspunkt
5. Aufwandskriterien/Kriterium
6. Maßstabgetreue Lage des Zielortes
7. Maßstabgetreue Hervorhebung des Zielortes bzw. Zielsymbole (In der 1. Darstellung)
8. Veränderte Lage des Zielortes
9. durch Kriterien bedingte Hervorhebung des Zielortes bzw. Zielsymbole (in der 2. Darstellung)
10. Gerade zum Ausgangspunkt
11. Zielort näher zum Ausgangspunkt als in der Ortsdarstellung
12. unveränderte Lage des Zielortes
13. Zielort weiter entfernt vom Ausgangspunkt als in der Ortsdarstellung
14. Kreislinien
15. Verschiebungslinie
16. Maßstabgetreue Kartendarstellung
17. geografische Orientierungselement
18. Symbole

## Patentansprüche

1. Verfahren zur Wiedergabe eines Ausgangspunktes (1) und mehrerer Zielorte (3) auf einem Bildschirm, der mit einem Datenverarbeitungsgerät verbunden ist, das mit einer Eingabeeinheit verbunden ist, mit folgenden Schritten
- Auswahl des Ausgangspunktes (1) auf einer Ortsdarstellung, die ein Ausschnitt aus einer topografischen Karte ist, und markiertes Darstellen des Ausgangspunktes als Startsymbol in der Ortsdarstellung auf dem Bildschirm,
- Auswahl mehrerer Zielorte (3) und markiertes Darstellen der einzelnen Zielorte (3) als Zielsymbole in der Ortsdarstellung auf dem Bildschirm,
- Festlegen eines Aufwandskriteriums (5) für das Erreichen der Zielorte (3) ausgehend vom Ausgangspunkt (1), insbesondere Fahrtzeit, Fahrtkosten, **gekennzeichnet durch**
- Auswahl einer zweiten, von der Ortsdarstellung unterschiedlichen und zum Aufwandskriterium (5) passenden Darstellung, insbesondere Zeitdarstellung,
- Berechnen der Lage der Zielorte (3) in der zweiten Darstellung in Abhängigkeit des Abstandes vom Ausgangspunkt und unter Berücksichtigung des Aufwandskriteriums (5),
- Anzeige der Zielorte (3) auf dem Bildschirm als Zielsymbole in der zweiten Darstellung, wobei die Ortsdarstellung nach wie vor auf dem Bildschirm sichtbar bleibt, die zweite Darstellung um das Startsymbol zentriert ist und der Abstand der Zielsymbole in der zweiten Darstellung vom Startsymbol eine Funktion des Aufwandskriteriums (5) ist und
- Anzeige eines Zusammenhangs zwischen der Lage mehrerer der einzelnen Zielsymbole in der Ortsdarstellung und des zugehörigen Zielsymbols in der zweiten Darstellung, wobei die Lage jedes der einzelnen Zielsymbole in der Ortsdarstellung, die Lage des zugehörigen Zielsymbols in der zweiten Darstellung, und die Lage des Ausgangspunktes (1) auf jeweils einer gemeinsamen Linie ausgerichtet werden.

2. Verfahren nach Anspruch 1, mit dem zusätzlichen Verfahrensschritt, dass die veränderte Lage (8) der angezeigten Zielorte (3) durch eine Verbindungslinie (15) zwischen der maßstabsgetreuen Anzeige eines Zielortes (6) und der Anzeige der ortsveränderten Lage (8) nach dem Aufwandskriterium (5) dargestellt wird.

3. Verfahren nach Anspruch 1 oder 2, mit dem zusätzlichen Verfahrensschritt, dass als Aufwandskriterium (5) die Fahrtzeiten oder Fahrtkosten oder andere Kriterien ausgewählt und in zwei oder mehr Intervalle aufgeteilt werden und durch Kreislinien (14) um den Ausgangspunkt (1) dargestellt werden, wobei für die Darstellung der Kreislinien (14) und der veränderten Zielorte (8) der gleiche Maßstab zugrunde gelegt wird.

4. Verfahren nach einem der Ansprüche 1 - 3, mit dem zusätzlichen Verfahrensschritt, dass die Darstellung der Lageveränderung der Zielorte (8) für den Betrachter dynamisch erfolgt und er die Lageveränderung visuell mitverfolgen kann.

5. Verfahren nach einem der Ansprüche 1 - 4, mit dem zusätzlichen Verfahrensschritt, dass für das Aufwandskriterium (5) verschiedene Verkehrsmittel oder Fortbewegungsarten zur Verfügung stehen die einzeln oder kombiniert bei der Bestimmung der veränderten Lage der angezeigten Zielorte (8) berücksichtigt werden.

6. Verfahren nach einem der Ansprüche 1 - 5, mit dem zusätzlichen Verfahrensschritt, dass für das Aufwandskriterium (5) Fahrtkosten auch fahrzeugfremde Kosten vom Anwender zusätzlich bestimmt werden können.

7. Verfahren nach einem der Ansprüche 1 - 6, mit dem zusätzlichen Verfahrensschritt, dass mehr als ein Aufwandskriterium (5) ausgewählt werden kann und die veränderte Lage der Zielorte (8) nach jedem einzelnen Aufwandskriterium (5) oder in einer Kombination von zwei oder mehr Aufwandskriterien (5) bildlich dargestellt werden.

8. Verfahren nach einem der Ansprüche 1 - 7, mit dem zusätzlichen Verfahrensschritt, dass mehr als eine Vorgabe für die anzuzeigenden Zielorte (3) bestimmt werden kann und bestimmte Zielorte (3) von der Hervorhebung ausgeschlossen werden.

9. Verfahren nach einem der Ansprüche 1 - 8, mit dem zusätzlichen Verfahrensschritt, dass die Hervorhebung der Zielorte (8) durch gleiche oder ungleichartige Symbole (1) von gleicher oder ungleicher Größe erfolgt, denen ein Informationsgehalt zugeordnet werden kann.

10. Verfahren nach einem der Ansprüche 1 - 9, mit dem zusätzlichen Verfahrensschritt, dass ein oder mehrere Zielorte (8) ausgewählt werden können und nach ihrer Auswahl für eine Anzeige der Wegstrecke auch mittels einer grafischen Hervorhebung oder andere Funktionen genutzt werden können.

11. Verfahren nach einem der Ansprüche 1 - 10, mit dem zusätzlichen Verfahrensschritt, dass der gewählte Ausgangspunkt (1), die ermittelte veränderte Lage (8) der angezeigten Zielorte (3) und die Darstellung der Karte (2) unverändert auf dem Bildschirm des Darstellungsmediums verschiebbar sind und der Ausgangspunkt (1) zentriert darstellbar ist.

## Claims

1. A method for displaying a starting point (1) and several destination locations (3) on a screen connected to a data processing device which is connected to an input unit, comprising the following steps:
- selecting the starting point (1) on a location-based representation, which is a section from a topographical map, and representing the starting point in a marked manner as a starting symbol in the location-based representation on the screen,
- selecting several destination locations (3) and representing the individual destination locations (3) in a marked manner as destination symbols in the location-based representation on the screen,
- setting an expenditure criterion (5) for reaching the destination locations (3) starting from the starting point (1), in particular the travel time, travel costs, **characterized by**
- selecting a second representation which is different to the location-based representation and fits the expenditure criterion (5), in particular a time-based representation,
- calculating the position of the destination locations (3) in the second representation in accordance with the distance from the starting point and taking into account the expenditure criterion (5),
- displaying the destination locations (3) on the screen as destination symbols in the second representation, wherein the location-based representation still remains visible on the screen, the second representation is centered around the starting symbol, and the distance of the destination symbols in the second representation from the starting symbol is a function of the expenditure criterion (5), and
- displaying a relationship between the position of several of the individual destination symbols in the location-based representation and the associated destination symbol in the second representation, wherein the position of each of the individual destination symbols in the location-based representation, the position of the associated destination symbol in the second representation, and the position of the starting point (1) are respectively aligned on one common line.

2. The method according to claim 1, comprising the additional method step that the altered position (8) of the displayed destination locations (3) is represented by a connecting line (15) between the true-to-scale display of a destination location (6) and the display of the position (8) altered in location in accordance with the expenditure criterion (5).

3. The method according to claim 1 or 2, comprising the additional method step that the travel time or travel costs or other criteria are selected as the expenditure criterion (5) and divided into two or more intervals and represented by circular lines (14) around the starting point (1), wherein the representation of the circular lines (14) and the altered destination locations (8) is based on the same scale.

4. The method according to any one of the claims 1 - 3, comprising the additional method step that the representation of the change of position of the destination locations (8), to the observer, takes place dynamically, and he is able to visually track the change of position.

5. The method according to any one of the claims 1 - 4, comprising the additional method step that various means of transport or forms of mobility are available for the expenditure criterion (5), which are taken into account individually or in combination in the determination of the altered position of the displayed destination locations (8).

6. The method according to any one of the claims 1 - 5, comprising the additional method step that travel costs, and also costs unrelated to the vehicle, can be additionally determined by the user for the expenditure criterion (5).

7. The method according to any one of the claims 1 - 6, comprising the additional method step that more than one expenditure criterion (5) can be selected, and the altered positions of the destination locations (8) are pictorially represented in accordance with each individual expenditure criterion (5) or in a combination of two or more expenditure criteria (5).

8. The method according to any one of the claims 1 - 7, comprising the additional method step that more than one specification for the destination locations (3) to be displayed can be determined and certain destination locations (3) are excluded from being highlighted.

9. The method according to any one of the claims 1 - 8, comprising the additional method step that the destination locations (8) are highlighted by identical or disparate symbols (1) of an identical or different size that can be associated with an informational content.

10. The method according to any one of the claims 1 - 9, comprising the additional method step that one or more destination locations (8) can be selected and, subsequent to their being selected, be used for displaying the route also by means of graphical highlighting or other functions.

11. The method according to any one of the claims 1 - 10, comprising the additional method step that the selected starting point (1), the determined altered position (8) of the destination locations (3) displayed and the representation of the map (2) can be shifted unaltered on the screen of the display medium and the starting point (1) can be represented in a centered manner.

## Revendications

1. Procédé de reproduction d'un point de départ (1) et d'une pluralité de destinations (3) sur un écran qui est connecté à un appareil de traitement de données qui est connecté à une unité d'entrée, comprenant les étapes suivantes consistant à
- sélectionner le point de départ (1) sur une représentation de lieu qui est un extrait d'une carte topographique, et représenter de façon marquée ledit point de départ en tant que symbole de départ dans la représentation de lieu sur l'écran,
- sélectionner une pluralité de destinations (3) et représenter de façon marquée les destinations (3) individuelles en tant que symboles de destination dans la représentation de lieu sur l'écran,
- déterminer un critère de dépense (5) pour atteindre la destination (3) à partir du point de départ (1), en particulier le temps de déplacement, les frais de déplacement,
**caractérisé par**
- sélectionner une deuxième représentation, en particulier représentation de temps, différente de la représentation de lieu et adaptée au critère de dépense (5),
- calculer la position de la destination (3) dans la deuxième représentation en fonction de la distance du point de départ et en tenant compte du critère de dépense (5),
- afficher les destinations (3) sur l'écran en tant que symboles de destination dans la deuxième représentation, la représentation de lieu restant toujours visible sur l'écran, la deuxième représentation étant centrée autour du symbole de départ et la distance séparant les symboles de destination dans la deuxième représentation et le symbole de départ étant une fonction du critère de dépense (5), et
- afficher une relation entre la position de plusieurs des symboles de destination individuels dans la représentation de lieu et du symbole de destination associé dans la deuxième représentation, dans lequel la position de chacun des symboles de destination individuels dans la représentation de lieu, la position du symbole de destination associé dans la deuxième représentation et la position du point de départ (1) sont orientées sur respectivement une ligne commune.

2. Procédé selon la revendication 1, comprenant l'étape de procédé supplémentaire consistant en ce que la position (8) modifiée des destinations (3) affichées est représentée par une ligne de liaison (15) entre l'affichage à l'échelle d'une destination (6) et l'affichage de la position (8) modifiée selon le critère de dépense (5).

3. Procédé selon la revendication 1 ou 2, comprenant l'étape de procédé supplémentaire consistant en ce que le temps de déplacement ou les frais de déplacement ou d'autres critères sont sélectionnés en tant que critère de dépense (5) et sont divisés en deux ou plusieurs intervalles et représentés par des lignes circulaires (14) autour du point de départ (1), dans lequel la même échelle est utilisée pour la représentation des lignes circulaires (14) et des destinations (8) modifiées.

4. Procédé selon l'une quelconque des revendications 1 à 3, comprenant l'étape de procédé supplémentaire consistant en ce que la représentation du changement de position des destinations (8) se fait de manière dynamique pour l'observateur et que celui-ci peut suivre visuellement le changement de position.

5. Procédé selon l'une quelconque des revendications 1 à 4, comprenant l'étape de procédé supplémentaire consistant en ce que, pour le critère de dépense (5), différents moyens de transport ou modes de déplacement sont disponibles qui sont pris en compte individuellement ou en combinaison lors de la détermination de la position modifiée des destinations (8) affichées.

6. Procédé selon l'une quelconque des revendications 1 à 5, comprenant l'étape de procédé supplémentaire consistant en ce que, pour le critère de dépense (5) des frais de déplacement, l'utilisateur peut déterminer en sus aussi des frais non liés au véhicule.

7. Procédé selon l'une quelconque des revendications 1 à 6, comprenant l'étape de procédé supplémentaire consistant en ce que plus d'un critère de dépense (5) peut être sélectionné et que la position modifiée des destinations (8) est imagée selon chaque critère de dépense (5) individuel ou en une combinaison de deux ou plusieurs critères de dépense (5).

8. Procédé selon l'une quelconque des revendications 1 à 7, comprenant l'étape de procédé supplémentaire consistant en ce que plus d'une définition pour les destinations (3) à afficher peut être déterminée et que certaines destinations (3) sont exclues de la mise en évidence.

9. Procédé selon l'une quelconque des revendications 1 à 8, comprenant l'étape de procédé supplémentaire consistant en ce que la mise en évidence des destinations (8) se fait par des symboles (1) identiques ou différents de taille identique ou inégale auxquels peut être associé un contenu informatif.

10. Procédé selon l'une quelconque des revendications 1 à 9, comprenant l'étape de procédé supplémentaire consistant en ce qu'une ou plusieurs destinations (8) peuvent être sélectionnées et, après avoir été sélectionnées, peuvent être utilisées pour un affichage de l'itinéraire également au moyen d'une mise en évidence graphique ou d'autres fonctions.

11. Procédé selon l'une quelconque des revendications 1 à 10, comprenant l'étape de procédé supplémentaire consistant en ce que le point de départ (1) sélectionné, la position (8) modifiée déterminée des destinations (3) affichées et la représentation de la carte (2) peuvent être déplacées de manière inchangée sur l'écran du support de représentation et que le point de départ (1) peut être représenté de manière centrée.
